# EUROPEAN PATENT APPLICATION

(11) **EP 4 825 335 A1**
(43) Date of publication of application: **21.10.2026**
(21) Application number: 25171240.2
(22) Date of filing: 17.04.2025
(51) Int. Cl.: A61C 8/00, A61C 9/00, A61C 13/00, A61C 5/70, A61C 13/30

(54) **A MEASUREMENT INSERT, A SYSTEM FOR TOOTH ROOT CANAL SHAPE MODELING COMPRISING A MEASUREMENT INSERT AND A METHOD FOR TOOTH ROOT CANAL SHAPE MODELING**

(71) Applicant: Malinowski, Aleksander, 46-203 Kluczbork (PL)
(72) Inventor: Malinowski, Aleksander, 46-203 Kluczbork (PL)
(74) Representative: Ptasinski, Konrad Witold

(57) **Abstract**

The present invention relates to a measurement insert (3) for a system for tooth root canal shape modeling comprising an imaging device and a calibration stand, wherein the measurement insert (3) comprising a canal part (4) configured to be inserted into a tooth root canal being modeled and a base part (5) configured to be connected to the calibration stand, wherein the canal part (4) extending from the base part (5), wherein the canal part (4) comprises at least one plastically deformable wire. The present invention also relates to a system for tooth root canal shape modeling comprising such the measurement insert (3) and a method for tooth root canal shape modeling.

## Description

The present invention relates to a measurement insert, a system for tooth root canal shape modeling comprising a measurement insert and a method for tooth root canal shape modeling. The objects of the invention are applied in stomatology, in particular in prosthodontic treatment.

A significant challenge in prosthodontic treatment is to rebuild the pulpless tooth, which has a substantial coronal tissue loss. A non-limiting example of such a situation are damaged or broken teeth protruding by no more than 2 mm above the gum level. As preparation is impossible, the most common state-of-the-art prosthetic fillings used to reinforce the tooth root and allow the restoration of the lost tooth crown are standard post-and-cores typically made of glass fiber. Their clear advantage lies in the fact that their modulus of elasticity, being approx. 20 GPa, is similar to that of the dentine, which is approx. 18 GPa. Unfortunately, such fibers do not perfectly assume the shape of the tooth canal. Moreover, they have a circular shape, which increases the susceptibility of the structure to torsional forces and may lead to the decementation of the post-and-core. They also cannot bear axial loads on the root, which may cause the root to undergo a longitudinal fracture.

The above problem can be solved with the use of individual post-and-cores prepared in the laboratory and having an oval shape perfectly matching the shape of the tooth canal. In state-of-the-art, post-and-cores dedicated for individual patients are prepared with materials which can be worked (e.g. machined) for providing them with the final desired shape. Typical solutions thus comprise metal post-and-cores, including those made of titanium or gold, as well as ceramic post-and-cores having a significantly higher Young's modulus, above 150 GPa. The use of post-and-cores having Young's modulus significantly different than that of the dentine may cause the root to break or the post-and-core to decement.

In recent years, TRINIA, which is a glass-fiber-reinforced resin, has become a promising material used in the manufacturing of post-and-cores. This material is available in the form of discs suitable for processing in the CAD-CAM technology. Importantly, TRINIA has the Young's modulus of 18.8 GPa, which renders it a promising candidate in the preparation of individual post-and-cores. In all prosthodontic works performed in the CAD-CAM technology, also in the works related to the preparation of the post-and-core, it is important to very precisely match the shape of the restored structures, in this case of the shape of the tooth root canal, and to digitize this shape for the purpose of further works related to the processing of the material.

Document EP2626036B1 discloses a method for virtually designing a post-and-core restoration adapted for attachment in a damaged tooth of a patient, wherein the damaged tooth comprises a bore for receiving the post-and-core. The method for virtually designing the tooth restoration uses a scanning system which comprises a longitudinal root part and the base part. The root part is in the shape of a thin and long pin, which is introduced during the scanning procedure into the already drilled bore hole. The above document indicates difficulties when scanning narrow longitudinal elements, and thus in the method for virtually designing a tooth restoration, the root part in the digital image is replaced with a computer 3D model. When performing the method for virtually designing a tooth restoration, the post-and-core is scanned after being arranged in the hole drilled in the prepared tooth or optionally it is scanned together with the impression of the remaining teeth, when it is removed together with the impression. In the above solution, the shape of the post-and-core corresponds to the shape of the drill used in the preparation of the hole, and therefore it does not allow for optional oval preparation, natural recesses (naturally shaped canals having e.g. drop-shaped cross-sections), lack of preparation or a possible accidental excessive preparation.

Document EP2400919B1 discloses a system and a computer-implemented method of designing and/or manufacturing a post-and-core to match a bore of a tooth. The method comprises the obtaining of digital scans of the tooth structures, wherein the problem of the invention is to obtain a precise scan of a bore in a tooth, which is impossible to obtain with the use of traditional optical scanning methods. For this purpose, the geometry of the bore is scanned with the use of its impression, obtained together with the impression of the adjacent teeth. First, a bore is drilled in the prepared tooth, wherein the bore is performed with the use of a dental drill. The bore is scanned by scanning the impression material from the entire impression model. Importantly, the obtaining of an impression following such a method results in bacterial contamination from the saliva and makes it impossible to obtain an impression in the cofferdam. Moreover, the lack of scaffolding (the post introduced into the canal) during the obtaining of the impression results in the possible shift of the axis of the long part of the impression and in the possible change of shape, even due to a limited contact.

On the other hand, document CN111067650A discloses a digital pile-core impression acquisition and model building technology without gypsum, belonging to the technical field of pile-core restoration. In one of the steps, an impression of the restored tooth canal is obtained and after the impression compound has set, the impression is optically scanned on the outside with the use of the 3Shape D2000 device. The digital model is subsequently used to build a post-and-core with the use of the CAD/CAM or 3D printing technology. Importantly, the obtaining of the impression entails the risk of bacterial contamination among others from saliva. Additionally, the lack of the canal part when obtaining the impression increases the risk that the geometry of the impression is changed, and thus reduces the manufacturing accuracy of the final post-and-core.

The technical problem of the present invention is to provide such a measurement insert and a system for tooth root canal shape modeling comprising such measurement insert which will allow the acquisition of a digital scan of the tooth root canal shape at a high level of accuracy, without measurement artifacts, and with all the characteristic anatomical structures of the modeled canal. It is additionally desirable to provide a measurement insert that will allow for more accurate modeling (mapping) of the tooth canal and will also be a universal solution, allowing the selection of the measurement insert geometry in response to the anatomical structure of the tooth and its surroundings. It is also desirable that the system for tooth root canal shape modeling allows the modeling of even thin unprepared canals without the need to perform additional preparations. It is additionally desirable that the system for tooth root canal shape modeling is a structurally simple solution, ensuring high operating reliability and increased durability. It is also desirable to provide a method for tooth root canal shape modeling which will allow a very precise and accurate digital scan of the tooth root canal shape used in further steps of manufacturing post-and-cores with the use of the CAD/CAM technology.

According to a first aspect of the invention, there is provided a measurement insert measurement insert for a system for tooth root canal shape modeling comprising an imaging device and a calibration stand, wherein the measurement insert comprising a canal part configured to be inserted into a tooth root canal being modeled and a base part configured to be connected to the calibration stand, wherein the canal part extending from the base part, characterized in that the canal part comprises at least one plastically deformable wire.

Preferably, the canal part is connected to the base part via an intermediate part.

Preferably, the canal part is releasably connected to the intermediate part via a coupling system.

Preferably, the intermediate part is releasably connected to the base part via the coupling system.

Preferably, the canal part is releasably connected to the base part via a coupling system.

Preferably, the coupling system is formed by a threaded connection, a locking screw with a complementary threaded hole, a locking system with a ball tensioned by a spring or a locking system with a resilient tongue.

Preferably, a post or a socket configured to form a form-fit connection with a corresponding socket or plug arranged on the calibration stand is formed on the lower surface of the base part.

Preferably, the canal part of the measurement insert extends along an axis laterally shifted from the axis of the base part.

Preferably, the canal part of the measurement insert has a structured surface.

Preferably, the base part of the measurement insert has a bevel in the region adjacent to the canal part and/or in the region adjacent to the opposite end.

Preferably, the at least one plastically deformable wire is made of a material selected from the group comprising stainless steel, chromium-nickel steel, chromium-cobalt alloy, titanium, titanium alloy, precious metal, including gold.

According to the second aspect of the invention, there is provided a system for tooth root canal shape modeling comprising an imaging device and a calibration stand, wherein the calibration stand comprises a body comprising two reference areas, with at least one reference element being arranged on the upper surface of the body, and a measurement insert comprising a canal part and a base part, wherein the body is detachably connected with the base part so that the canal part extends perpendicular to the upper surface of the body and substantially parallel to the reference element, characterized in that the measurement insert is the measurement insert as defined in the first aspect of the present invention.

Preferably, the reference element is a solid having a symmetry axis extending perpendicular to the upper surface of the body and substantially parallel to the canal part of the measurement insert.

Preferably, the reference element is selected from a group comprising: a cone or a truncated cone, a cylinder, a prism with a polygonal base, a pyramid with a polygonal base and their combinations.

According to the third aspect of the invention, there is provided a method for tooth root canal shape modeling comprising the following steps:
a) impression compound is introduced into the tooth canal, and subsequently a measurement insert is introduced thereto,
b) after the impression compound has set, the measurement insert is removed,
c) the measurement insert with the set impression compound is scanned with the imaging device,
characterized in that the measurement insert is the measurement insert as defined in the first aspect of the present invention and/or in step c) the measurement insert is scanned by means of the system for tooth root canal shape modeling as defined in the second aspect of the invention.

The system for tooth root canal shape modeling according to this invention is used to obtain indirectly a scan of the shape of the inside of a broken tooth root in a spatial reference system relative to the adjacent teeth and to the occlusion. Owing to the design of the calibration stand, the system allows an accurate modeling of tooth root shapes together with various curvatures, recesses and the oval shape in the transverse plane. The system of the invention also allows work without the mechanical preparation of the tooth root (drilling, which weakens its structure), and only by means of removing e.g. the warm material (gutta percha) filling the root. Moreover, it allows work in a cofferdam, which reduces the risk of bacterial infection. The use of the calibration stand, which comprises the reference elements as defined in this invention, allows increased scanning accuracy in the case of narrow and longitudinal elements, such as a tooth root canal impression, by adding reference structures for the imaging device. On the other hand, the increased number of the reference elements further increases scanning accuracy, while reducing the risk of generating artifacts in digital models of scanned structures. Additionally, with the axis of the canal part being shifted from the axis of the base part, the asymmetry of the measurement insert allows the digital model obtained by means of the intraoral scan to be positioned with respect to the measurement insert located in the tooth canal. On the other hand, the use of the structured surface of the canal part allows an increased retention of the impression compound. In addition, thanks to the use of the canal part in the measurement insert in the form of at least one plastically deformable wire, a more accurate modeling (mapping) of the tooth canal was obtained by the possibility of adapting the geometry of the wire to the geometry of the tooth root canal. In turn, the use of a coupling system for detachable attachment of the canal part, through an intermediate part or directly to the base part, allows for the replacement of the canal part and free selection of the number and material characteristics of plastically deformable wires for the desired application, which makes the solution universal and flexible in use.

Importantly, the object of this invention is dedicated for prosthodontic works in which the post-and-core is manufactured in the CAD/CAM technology, and therefore it allows the use of any material suitable for machining, such as, without limitation, zirconium, gold, cobalt-chromium alloys, sintron, TRINIA, titanium or any other dentistry alloy. In comparison to classical post-and-core manufacturing methods, the use of this invention in the CAD/CAM process of manufacturing post-and-cores allows increased accuracy and fitting level regardless of the used material.

Moreover, it is worth to be stressed that the object of the invention can not only serve to model the natural shape of the canal, but also ensure full control of this shape, e.g. when it is advantageous to change the cross-sectional shape to oval shape in order to prevent the possible rotation of the post-and-core in the canal. The object of the invention is thus not limited only to be used in modeling the shapes of unprepared canals, but - to the contrary - it allows the modeling of any anatomical teeth structures, as well as structures resulting from prior preparation, such as prepared canals.

The solution according to the present invention has been shown in the embodiments below and illustrated in the drawing, in which
Fig. 1 is an axonometric view of the calibration stand according to one embodiment of the system for tooth root shape modeling,
Fig. 2 is a front view of the calibration stand shown in Fig. 1,
Fig. 3A-D are front views of the measurement insert according to one embodiment of the invention in successive impression-taking operations,
Fig. 4 is an axonometric view of the measurement insert according to one embodiment of the invention,
Fig. 5 is an axonometric view of the calibration stand according to another embodiment of the system for tooth root shape modeling,
Fig. 6 is a front view of the calibration stand according to another embodiment of the invention with the impression compound present on the canal part of the measurement insert,
Fig. 7 is a digital model of the tooth root shape obtained with the system for tooth root shape modeling of this invention,
Figs. 8A-D are, respectively, an axonometric view, a front view, a side view and a cross-sectional view of one embodiment of the measurement insert according to the present invention,
Figs. 9A-D are, respectively, an axonometric view, a front view, a side view and a cross-sectional view of another embodiment of the measurement insert according to the present invention,
Figs. 10A-D are, respectively, an axonometric view, a front view, a side view and a cross-sectional view of another embodiment of the measurement insert according to the present invention,
Figs. 11A-D are, respectively, an axonometric view, a front view, a side view and a cross-sectional view of another embodiment of the measurement insert according to the present invention,
Figs. 12A-D are, respectively, an axonometric view, a front view, a side view and a cross-sectional view of another embodiment of the measurement insert according to the present invention,
Figs. 13A-D are, respectively, an axonometric view, a front view, a side view and a cross-sectional view of another embodiment of the measurement insert according to the present invention,
Figs. 14A-D are, respectively, an axonometric view, a front view, a side view and a cross-sectional view of another embodiment of the measurement insert according to the present invention,
Figs. 15A-D are, respectively, an axonometric view, a front view, a side view and a cross-sectional view of another embodiment of the measurement insert according to the present invention,
Figs. 16A-D are, respectively, an axonometric view, a front view, a side view and a cross-sectional view of another embodiment of the measurement insert according to the present invention,
Figs. 17A-D are, respectively, an axonometric view, a front view, a side view and a cross-sectional view of another embodiment of the measurement insert according to the present invention,
Figs. 18A-D are, respectively, an axonometric view, a front view, a side view and a cross-sectional view of another embodiment of the measurement insert according to the present invention,
Figs. 19A-D are, respectively, an axonometric view, a front view, a side view and a cross-sectional view of another embodiment of the measurement insert according to the present invention,
Figs. 20A-D are, respectively, an axonometric view, a front view, a side view and a cross-sectional view of another embodiment of the measurement insert according to the present invention,
Fig. 21 is a front view of the measurement insert according to a further embodiment of the invention, partially positioned in a tooth canal.

### Example 1

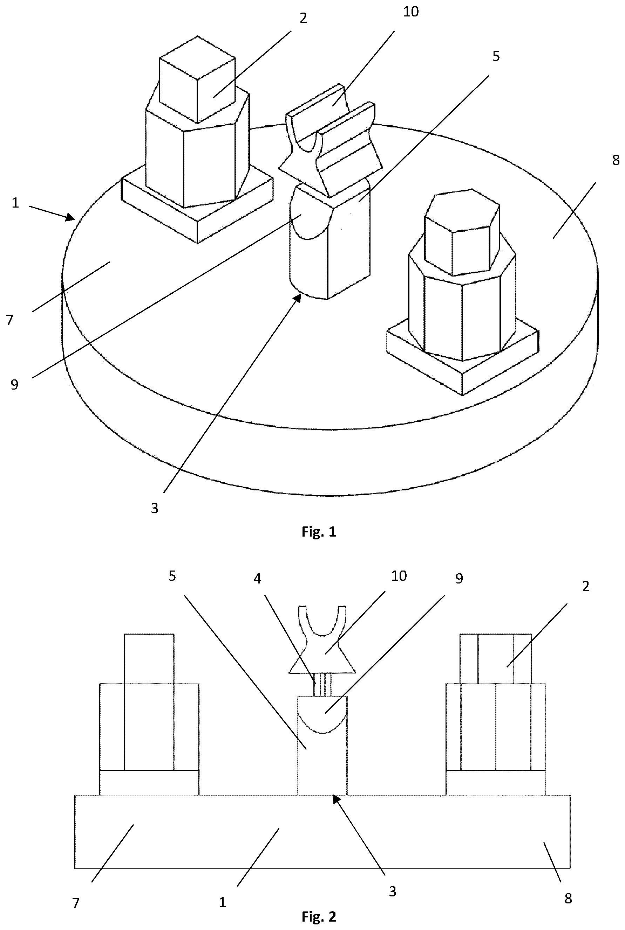

An embodiment of the system for tooth root shape modeling according to this invention is partially shown in an axonometric view in Fig. 1 and in a front view in Fig. 2. In general, the system for tooth root shape modeling comprises an imaging device and a calibration stand. In this embodiment, the imaging device is an optical scanner, but it is not a limitation to the scope of this invention, and in alternative embodiments it is possible to use other imaging devices, such as a laser scanner, acoustic scanner or a mechanical profilometer, on condition that they allow the recording of the digital model of the analyzed object. The type of the applied optical scanner is also not a limitation and depending on the application, it is possible to use for example UV, VIS, IR scanners with or without structured light beam.

A non-limiting embodiment of the system for tooth root shape modeling comprises a calibration stand which is arranged on a rotatable platform and an imaging device which is arranged in a circumferential position with the imaging beam aimed at the analyzed element. Alternatively, a fixed design of the calibration stand can be used with a circumferentially rotating imaging device or a plurality of imaging devices arranged circumferentially and covering the entire 3D surface of the analyzed object with the imaging beam.

The calibration stand shown in an axonometric view in Fig. 1 and in a front view in Fig. 2 is a component of the system for tooth root shape modeling according to this invention. The calibration stand comprises a body 1, with two opposite reference areas, i.e. a first reference area 7 and a second reference area 8. In this embodiment shown in Fig. 1, the body 1 has the shape of a round disk, where the corresponding reference areas 7, 8 are surfaces encompassing the semicircles of the body 1.

It should be noted, however, that the shape of the body 1 is also not limited to the circular (round) shape shown in this embodiment and in alternative embodiments it can assume the shape of a different solid, on condition that the flat upper surface is present.

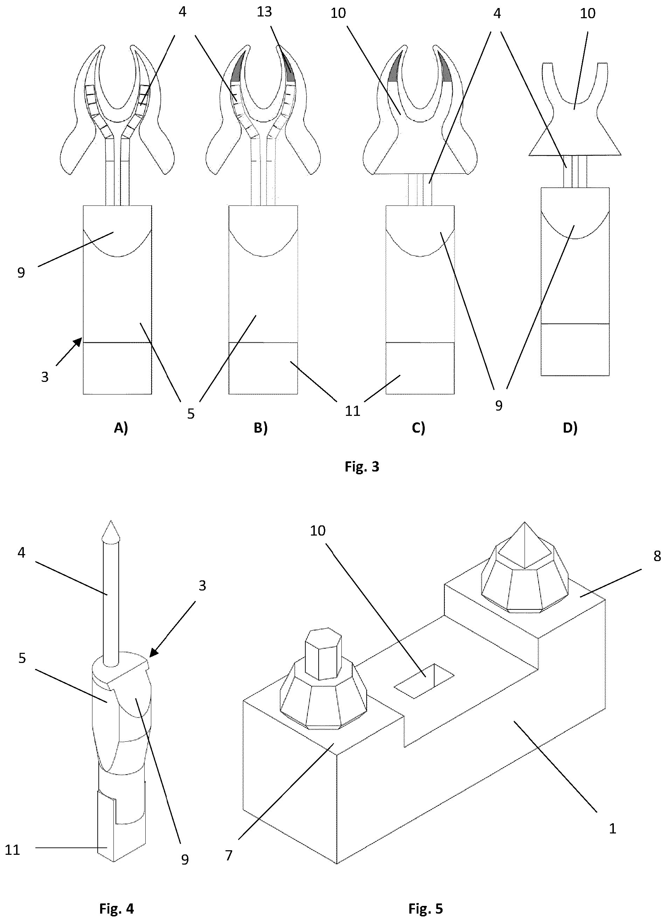

A non-limiting alternative embodiment of the body 1 is shown in an axonometric view in Fig. 5, where the body 1 is cuboidal in shape and extends horizontally, i.e. it has a longer side which extends horizontally and a shorter side which extends vertically, wherein a flat upper surface of the body 1 is present.

Going back to Figs. 1 - 2, there are two reference elements 2 arranged on the upper surface of the body, in the first reference area 7 and the second reference area 8, respectively. It should be emphasized here that in alternative embodiments it is possible to use a smaller or a greater number of reference elements 2, with at least one reference element 2 being required. Fig. 5 also shows an embodiment of the body 1 with two reference elements 2. As regards the construction of the calibration stand and the reference elements contained therein, their geometry, arrangement and shape, the disclosure contained in international patent application No. PCT/IB2025/050699 applies.

As best visible in Fig. 1 and 2, a measurement insert 3 extends upwards from the upper surface of the body 1. The measurement insert 3 is detachably connected with the body 1 with the use of a form-fit connection (not shown in Figs. 1 and 2). Figs. 1 and 2 show the measurement insert 3 inserted into the body 1, so the type of connection is not visible. An analogous type of connection is presented in the embodiment shown in Figs. 4 and 5, where the form-fit connection is formed by a post 11 and a socket 12, complementary to each other and formed to fit loosely. On the other hand, the measurement insert 3 comprises a base part 5, with a narrow canal part 4 extending therefrom, dedicated to be introduced into the tooth root canal. Opposite to the canal part 4, the post 11 extends from the base part 5 (see Fig. 4) and is received by the socket 12 formed in the central part of the upper surface of the body 1, in the connection region of the first reference area 7 and the second reference area 8 (see Fig. 5). In an alternative embodiment, the form-fit connection may be formed by complementary and fitting forms of other shapes, provided that the measurement insert 3 is securely mounted in the body 1 of the calibration stand. In yet another embodiment, the post 11 extends from the upper surface of the body 1 and is fitted with the socket 12 located in the base part 5, opposite to the canal part 4.

Importantly, the measurement insert 3 comprises a canal part 4, which may take the form of at least one plastically deformable wire. The measurement insert 3 shown in Figs. 1 and 2 has an impression 10 of the tooth root canal made of impression material placed on the canal part 4 in the form of two plastically deformable wires. Figs. 3A-D show the measurement insert 3 in a side view in successive steps of taking the impression 10. Fig. 3A shows the measurement insert 3 placed with the canal part 4 in the tooth root canals, respectively, wherein in the present example a situation is shown in which the tooth root has two canals, and consequently the canal part 3 of the measurement insert 3 has two wires respectively, which are inserted into said canals. Due to the plastically deformable nature of the wires used in the canal part 4, the aforementioned wires can adapt to the curvature of the canal, as shown in Fig. 3A-B, thanks to which they allow for the formation of a more stable scaffold for the impression material, which translates into the reliability of the system and the precision of modeling. It is worth adding that in the present embodiment of the invention, the canal part 4 of the measurement insert 3 (in the form of plastically deformable wires) is permanently attached to the base part 5, however, this does not constitute a limitation of the scope of the present invention, and in alternative embodiments it is possible to use a detachable nature of the connection of the canal part 4 with the base part 5.

As mentioned above, the canal part 4 of the measurement insert 3 takes the form of plastically deformable wires (at least one), the number of which corresponds to the number of tooth root canals into which the measurement insert 3 is inserted. Fig. 4 shows a non-limiting embodiment of the measurement insert 3 with the canal part 4 having one plastically deformable wire, which measurement insert 3 is dedicated to modeling a tooth root with one canal.

It is worth mentioning that the plastically deformable wires used in the canal part 4 are made of a material that exhibits plastic properties (i.e. plastic deformation) while maintaining structural stability that allows the impression material to be held in place. As non-limiting examples of the materials used for plastically deformable wires, metal alloys that are used in the field of technology, among others for retainers and clasps in prostheses, can be mentioned. In fact, these materials combine appropriate plasticity with the possibility of modeling and corrosion resistance. In one of the embodiments of the invention, the material used for the plastically deformable wires is stainless steel (chromium-nickel steel, such as 18/8 steel, i.e. 18% chromium, 8% nickel), which provides the wires constituting the canal part 4 with a plastically deformable character, resulting in the fact that the wire made of it bends easily, and at the same time after bending it maintains its shape. It is worth adding that stainless steel is a material resistant to corrosion and well tolerated by the body. As an alternative material for the canal part 4 of the measurement insert 3, a chromium-cobalt alloy (e.g. Elgiloy), which is commonly used in orthodontics, especially for more advanced retainers, can be mentioned. Another non-limiting example of a material for a plastically deformable wire is a chromium-cobalt alloy available in various hardnesses, from soft (plastic) to very hard, which can be subjected to a hardening process (heat activation) after forming. Another alternative material for plastically deformable wires of the canal part 4 of the measurement insert 3 is titanium (e.g. pure titanium grade 4.5) and titanium alloys (e.g. Nitinol - an alloy of nickel and titanium), which are commonly used in orthodontics. Nitinol has a plastically deformable characteristic, allowing for easy bending, and at the same time is a biocompatible and corrosion-resistant material. Additionally, as another alternative, wires made of a soft alloy of precious metals, such as gold, can be mentioned.

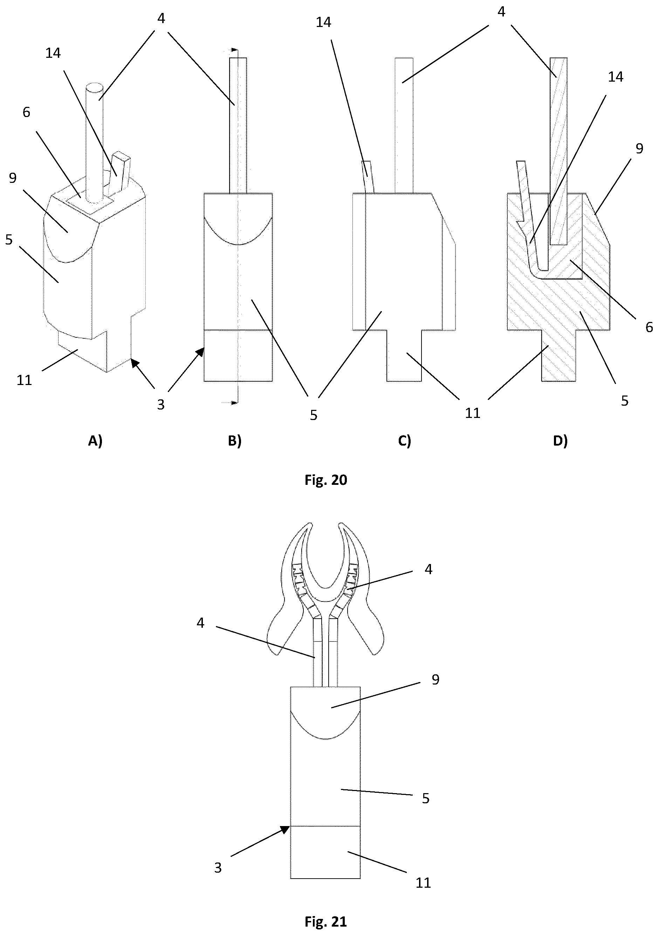

In one embodiment of the system for tooth root shape modeling, shown among others in Fig. 4, the canal part 4 of the measurement insert 3 extends along an axis laterally shifted from the axis of the base part 5. The lateral shift of the canal part 4 from the axis defining the axis of the base part 5 ensures additional feedback information on the geometry of the modeled shape during the scanning of the measurement insert 3 arranged inside the tooth root canal with the set impression compound. In yet another embodiment, shown in a front view in Fig. 21, the canal part 4 of the measurement insert 3 has a structured outer surface (for example notched, matted, roughened or knurled) for ensuring improved retention of the impression compound. In another preferred embodiment, the base part 5 of the measurement insert 3 has a bevel 9 in the region adjacent to the canal part 4. The bevel 9, located adjacent to the canal part 4 of the measurement insert 3, is used to facilitate the orientation of the digital model of the measurement insert 3 after scanning (due to the non-symmetrical character of the base part 5) as well as to facilitate access to the anatomical structures of the patient for the scanning beam during the scanning with the use of the intraoral scanner with the measurement insert 3 introduced into the tooth root. Additionally, the base part 5 may be provided with an analogical bevel in the region adjacent to the form-fit connection 6 for additionally facilitating the orientation of the digital model and access to the scanning beam.

In the tooth root shape modeling system, the reference element 2 is in the form of a solid having a symmetry axis extending perpendicular to the upper surface of the body 1 and substantially parallel to the canal part 4 of the measurement insert 3. In the embodiment shown in Figs. 1 - 2, the reference elements 2 are in the form of three regular prisms connected in an array one above the other, wherein the first reference element 2 comprises a square-based prism on which a hexagon-based prism is arranged, on which again a square-based prism is arranged, wherein the upper square-based prism has a smaller lateral dimension than the lower square-based prism. In turn, the second reference element 2 comprises a square-based prism on which an octagon-based prism is arranged, on which a hexagon-based prism is arranged, wherein the upper hexagon-based prism has a smaller lateral dimension than the prisms arranged below it. In the present embodiment of the invention, the height of the reference element 2 is greater than the height of the base part 5 of the measurement insert 3, and smaller than the height of the canal part 4 of the measurement insert 3, but in alternative embodiments the height of the reference element 2 can be greater than the height of the entire measurement insert 3 mounted in the body 1 of the calibration stand.

It is worth emphasizing that the shape of the reference element 2 is not limited to that shown in Figs. 1 - 2, and in alternative embodiments it is possible to use a reference element 2 having a different geometry, for example in the form of a solid having a symmetry axis extending perpendicular to the upper surface of the body 1 and substantially parallel to the canal part 4 of the measurement insert 3. The reference element 2 can thus assume a form of a cone or a truncated cone, a cylinder, a prism with a polygonal base, a pyramid with a polygonal base and their combinations. Non-limiting examples of alternative reference elements 2 are shown in Fig. 5, where the reference element 2 is in the form of regular octagonal truncated pyramids arranged one over another in such a manner that they are connected with their bases. Both of the truncated octagonal pyramids of each reference element 2 share the vertical symmetry axis which is parallel to the symmetry axis of the canal part 4 of the measurement insert 3. On the upper surface of the two connected truncated pyramids, the reference element 2 arranged on the first reference area 7 has a solid in the form of a regular hexagonal prism and the thus connected three solids form a complete reference element 2 according to this invention, arranged on the first reference area 7. In turn, on the second reference area 8, there is a square pyramid arranged on the upper surface of the two connected regular truncated pyramids. The thus connected three solids form a complete reference element 2 according to this invention, arranged on the second reference area 8.

It should be emphasized again that with respect to the construction of the reference elements 2, their geometry, arrangement and shape, the disclosure contained in international patent application No. PCT/IB2025/050699 applies.

The system for tooth root shape modeling shown and described in detail above is used in the method for tooth root shape modeling. The method comprises a step in which:
a) impression compound is introduced into the tooth canal, and subsequently a measurement insert 3 is introduced thereto,
b) after the impression compound has set, the measurement insert 3 is removed,
c) the measurement insert 3 with the set impression compound is scanned with the use of the imaging device after the measurement insert 3 had been connected to the calibration stand with the use of the form-fit connection.

Optionally, after the impression compound has set and before the measurement insert 3 is removed, the base part 5 of the measurement insert 3 and at least one adjacent anatomical structure are scanned with the use of an intraoral imaging device.

Fig. 3A-B shows front views of the measurement insert 3 according to one embodiment of the invention in successive operations of taking an impression 10 of a tooth root canal. In the step shown in Fig. 3A, the canal part 4 in the form of two plastically deformable wires is inserted into two tooth root canals, wherein the plastically deformable wires, due to their plastically deformable nature, are shaped (by bending) to a geometry corresponding to the geometry of the canal. Fig. 3B shows an analogous situation, wherein the tooth root canals have been treated, which resulted in the introduction of a filling 13 in the deepest areas of the canals, for example in the form of gutta-percha. It is worth noting that the plastically deformable wires constituting the canal part 4 are introduced into the interior of the canals to a depth approximately corresponding to the depth at which the filling 13 is located. Fig. 3C shows the situation shown in Fig. 3B, but after the introduction of the impression material into the canals (leaving the previously introduced plastically deformable wires constituting the canal part 4 of the measurement insert 3 in place). After the impression material has solidified, it is withdrawn from the root canal together with the measurement insert (fig. 3D) and placed on the calibration stand, as shown in Figs. 1 and 2, where it is scanned by the imaging device discussed above.

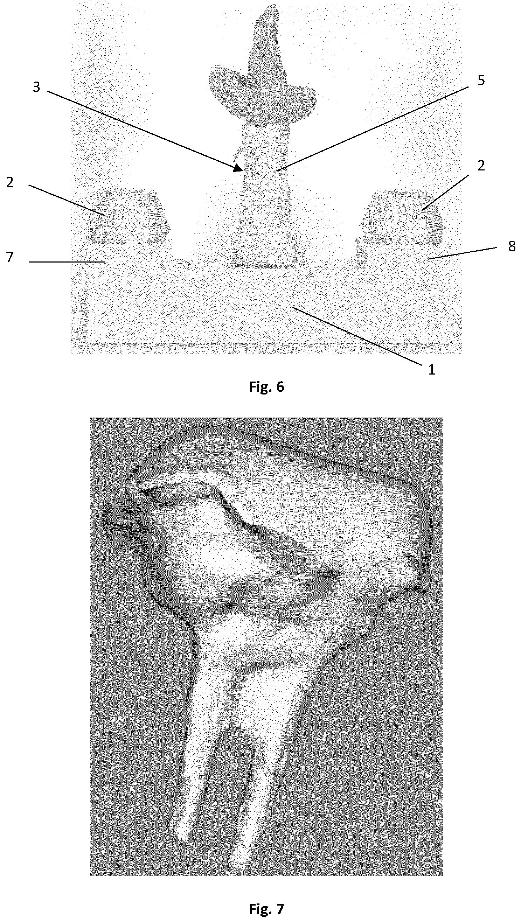

A detailed plan of the prosthodontic treatment can comprise the following steps:
1. Root canal treatment of a tooth in a cofferdam (typically realized during the previous visit to the dental clinic).
2. Scanning of the dentition and of the occlusion with the root protected with composite.
3. Installation of a cofferdam, wherein the cofferdam is installed in such a manner that the treated tooth is located in the work (i.e. unprotected) space together with at least one tooth adjacent to the treated tooth.
4. Removal of the protective composite and preparation of the inside of the tooth root.
5. Scanning of the area exposed by the cofferdam (the broken tooth and at least one adjacent tooth).
6. Application of the impression compound into the tooth root canal.
7. Insertion of the measurement insert 3 into the tooth root together with the compound, wherein the canal part 4 is introduced into the tooth canal, and the base part 5 protrudes outside the tooth canal and is visible to the intraoral scanner (Fig. 3A and 3B).
8. Scanning of the measurement insert 3, i.e. of its visible base part 5 together with the at least one adjacent tooth (and the anatomical structures exposed by the cofferdam).
9. Removal of the measurement insert 3 and arranging it on the calibration stand with the use of the form-fit connection (see Fig. 6, where the canal part 4 of the measurement insert 3 has a set impression compound corresponding in shape to the tooth root canal).
10. Using the scanning device to scan the measurement insert 3 positioned on the calibration stand, wherein the result of scanning is the digital model of the inside of the canal together with the surrounding tissues (for example in the form of preserved tooth elements protracting above the gum and/or gum fragments - see Fig. 7, which shows an example of a digital model of two tooth root canals).
11. Sending the digital scans to the laboratory.
12. Protecting the tooth again with the composite and removing the cofferdam.
13. Designing and manufacturing the post-and-core in the laboratory. The technician positions the scans with respect to each other on the basis of the teeth adjacent to the broken tooth and of the measurement insert 3 present in different scans. The calibration stand is digitally removed from the design, as it only serves to scan the measurement insert 3 together with the impression compound.
14. During the subsequent visit, the cementing of the post-and-core and starting the procedure of installing the prosthetic crown, wherein these actions are performed optionally in a cofferdam.

### Example 2

The system for tooth root shape modeling according to the second embodiment of the invention has a structure similar to the structure of the system shown in the first embodiment, and therefore similar components will not be described again for the clarity of this description of the invention.

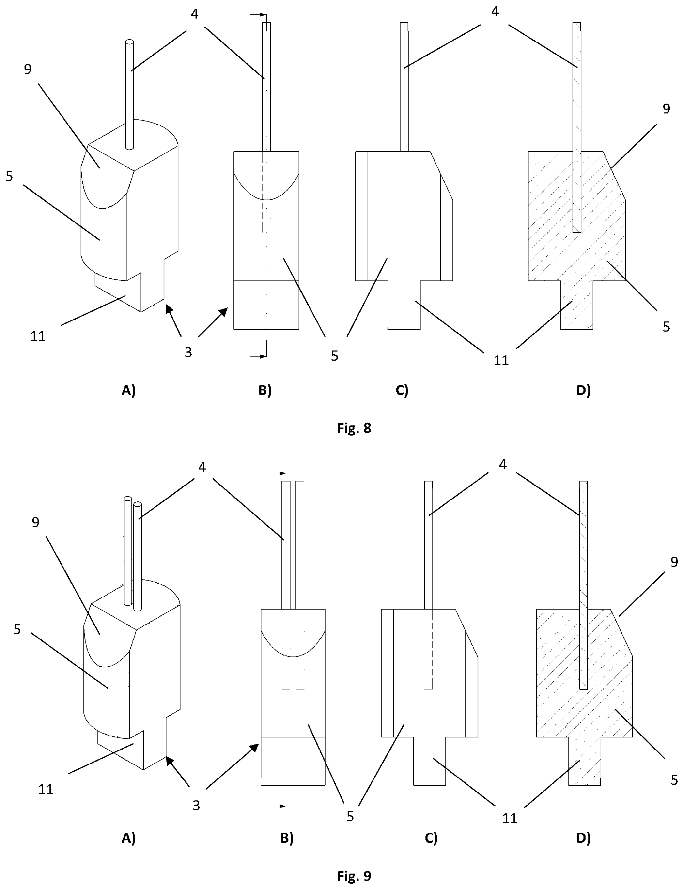

Unlike in the first embodiment, in the second embodiment of the system for tooth root shape modeling the measurement insert 3 has the structure shown in detail in Fig. 8A-D. The structure of the measurement insert 3 shown in Figs. 8A-D is substantially consistent with the structure of the measurement inserts 3 shown in the previous embodiments. In more detail, the measurement insert 3 comprises a base part 5, from the upper surface of which a canal part 4 in the form of a single plastically deformable wire extends. The shown measurement insert 3 also comprises a post 11 extending from the lower surface of the base part 5 and constituting a complementary element with the socket 12 arranged on the upper surface of the body 1, thereby forming a form-fit connection. In addition, the measurement insert 3 comprises a bevel 9 formed in the region of the upper edge of the base part 5. It is worth adding that in the presented example of the measurement insert 3, the canal part 4 in the form of a plastically deformable wire is permanently connected with the base part 5 and extends into it, which is best illustrated in Fig. 3D.

Another non-limiting example of the measurement insert 3 constituting a component of the system for tooth root shape modeling according to the present invention is shown in Figs. 9A-D. The structure of the measurement insert 3 shown in Figs. 9A-D is substantially similar to the structure of the measurement insert 3 shown in Figs. 8A-D with the difference that the canal part 4 comprises two plastically deformable wires extending from the base part 5 and permanently embedded therein. The plastically deformable wires of the canal part 4 are arranged next to each other at a small distance and are intended for insertion into two separate tooth root canals.

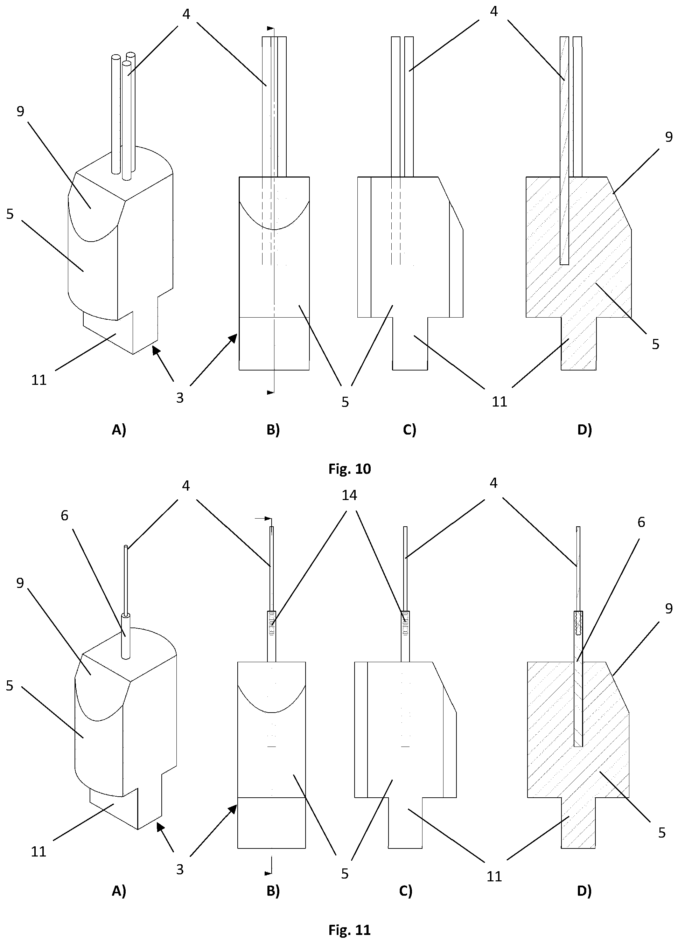

Another non-limiting example of the measurement insert 3 constituting a component of the system for tooth root shape modeling according to the present invention is shown in Figs. 10A-D. The structure of the measurement insert 3 shown in Figs. 10A-D is substantially similar to the structure of the measurement insert 3 shown in Figs. 8A-D and 9A-D with the difference that the canal part 4 comprises three plastically deformable wires extending from the base part 5 and permanently embedded therein. The plastically deformable wires of the canal part 4 are arranged next to each other at a small distance (forming a triangular arrangement in the top view) and are intended for insertion into three separate tooth root canals.

Another non-limiting example of the measurement insert 3 constituting a component of the system for tooth root shape modeling according to the present invention is shown in Figs. 11A-D. The structure of the measurement insert 3 shown in Figs. 11A-D is substantially similar to the structure of the measurement insert 3 shown in Figs. 8A-D with the difference that the canal part 4 comprises one plastically deformable wire which is attached to the base part 5 via an intermediate part 6. In the present example, the intermediate part 6 is a cylinder made of a rigid material (for example hard plastic or metal), the lower segment of which extends into the base part 5 and is permanently attached to it. A second segment of the intermediate part 6 extends from the upper surface of the base part 5. The plastically deformable wire is attached to the protruding segment of the intermediate part 6 via a coupling system 14 which is a type of releasable connection. In the present embodiment, the coupling system 14 is realized by means of a threaded connection in the form of an external thread in the lower region of the plastically deformable wire and a complementary internal thread formed in the axial hole of the intermediate part 6, at its upper end. As a result, the canal part 4 in the form of a plastically deformable wire is screwed into the intermediate part 6 to form a complete measurement insert 3. Thanks to such a construction, the universality and flexibility of the system for tooth root shape modeling according to the present invention have been achieved through the possibility of replacing the canal part 4, allowing for the selection of operating parameters and geometry for a given application (for example, the length and thickness of the wire, the use of a wire with a structured surface, the degree of plasticity of the wire). It is worth emphasizing that the type of the coupling system 14 used does not constitute a limitation of the scope of the present invention, and in alternative embodiments, a coupling system 14 of a different construction can be used, provided that the detachable nature of the connection of the canal part 4 with the intermediate part 6 and/or the base part 5 is ensured.

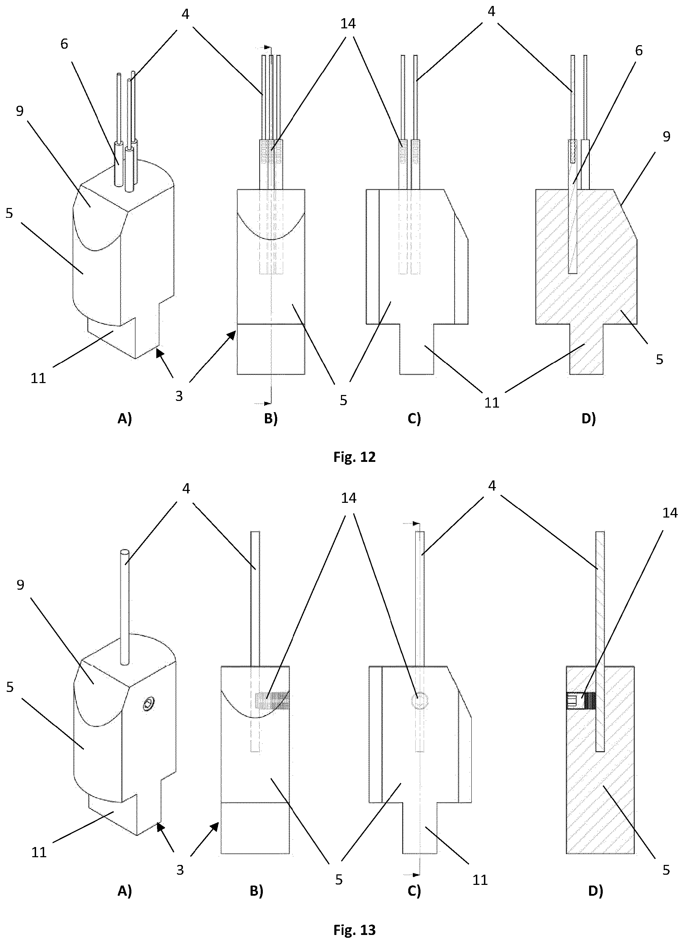

Another non-limiting example of the measurement insert 3 constituting a component of the system for tooth root shape modeling according to the present invention is shown in Figs. 12A-D. The structure of the measurement insert 3 shown in Figs. 12A-D is substantially similar to the structure of the measurement insert 3 shown in Figs. 11A-D with the difference that the canal part 4 comprises three plastically deformable wires connected via coupling systems 14 to three intermediate parts 6, respectively, which extend from the base part 5 and are permanently embedded therein. The plastically deformable wires of the canal part 4 are arranged next to each other at a small distance (forming a triangular arrangement in the top view) and are intended for insertion into three separate tooth root canals.

Another non-limiting example of the measurement insert 3 constituting a component of the system for tooth root shape modeling according to the present invention is shown in Figs. 13A-D. The structure of the measurement insert 3 shown in Figs. 13A-D is substantially similar to the structure of the measurement insert 3 shown in Figs. 8A-D with the difference that the canal part 4 in the form of one plastically deformable wire is releasably connected to the base part 5 and locked therein by means of a coupling system 14. The canal part 4 shown in the present embodiment is inserted into an opening formed in the base part 5, said opening allowing the canal part 4 to be freely inserted into the base part 5. The coupling system 14 takes the form of a locking screw, inserted into a threaded opening formed in the side wall of the base part 5, wherein the axis of the locking screw and the threaded opening are substantially perpendicular to the axis of the canal part 4. After the canal part 4 is inserted into the base part 5, the locking screw, which is a component of the coupling system 14, is tightened until the locking screw face contacts the canal part 4 and blocks the movement of the canal part 4 within the opening in the base part 5. The use of the coupling system 14 allows for the replacement of the canal part 4 and the selection of its operating parameters in relation to the application needs.

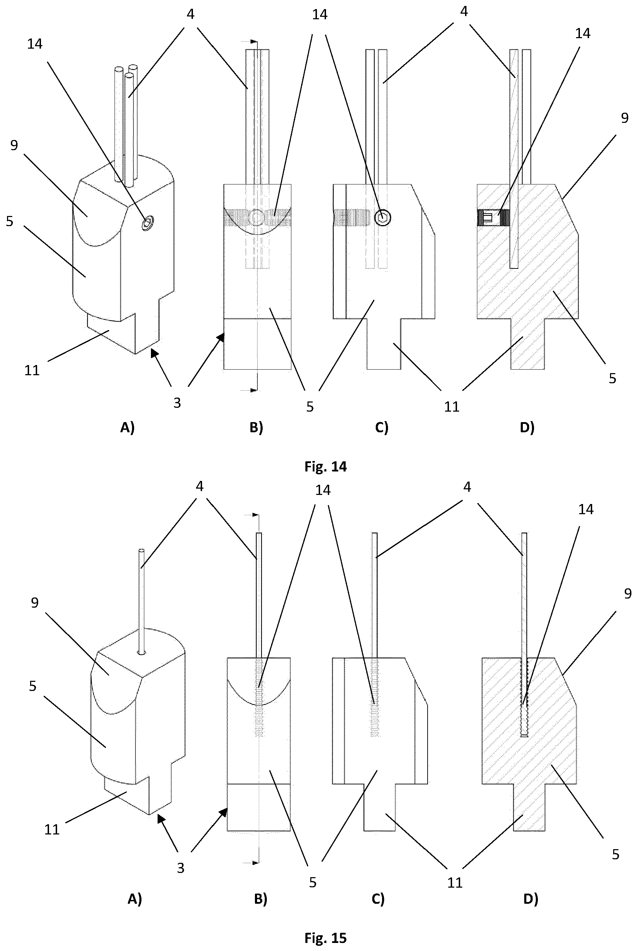

Another non-limiting example of the measurement insert 3 constituting a component of the system for tooth root shape modeling according to the present invention is shown in Figs. 14A-D. The structure of the measurement insert 3 shown in Figs. 14A-D is substantially similar to the structure of the measurement insert 3 shown in Figs. 13A-D with the difference that the canal part 4 comprises three plastically deformable wires releasably connected to the base part 5 and locked therein by means of three coupling systems 14. The plastically deformable wires of the canal part 4 are arranged next to each other at a small distance (forming a triangular arrangement in the top view) and are intended for insertion into three separate tooth root canals. The three coupling systems 14 take a form similar to the coupling system 14 shown in Figs. 13A-D, with each coupling system 14 being arranged on a different side wall of the base part 5, i.e. two side walls and a rear wall. Each coupling system 14 is dimensioned so that the face of the locking screw comes into contact with another plastically deformable wire of the canal part 4, preventing it from sliding out of the base part 5.

Another non-limiting example of the measurement insert 3 constituting a component of the system for tooth root shape modeling according to the present invention is shown in Figs. 15A-D. The structure of the measurement insert 3 shown in Figs. 15A-D is substantially similar to the structure of the measurement insert 3 shown in Figs. 8A-D with the difference that the canal part 4 comprises one plastically deformable wire, wherein the canal part 4 being releasably connected to the base part 5 by means of a coupling system 14. In the present embodiment of the invention, the coupling system 14 takes the form of a threaded hole formed in the upper surface of the base part 5 and extending into the base part 5. The canal part 4 in turn comprises a plastically deformable wire, the lower end of which comprises an external thread complementary to the internal thread of the hole formed in the base part 5. In this way, the canal part 4 is screwed with its threaded end into the threaded hole in the base part 5 and is thereby held in place during the impression-taking and scanning procedure.

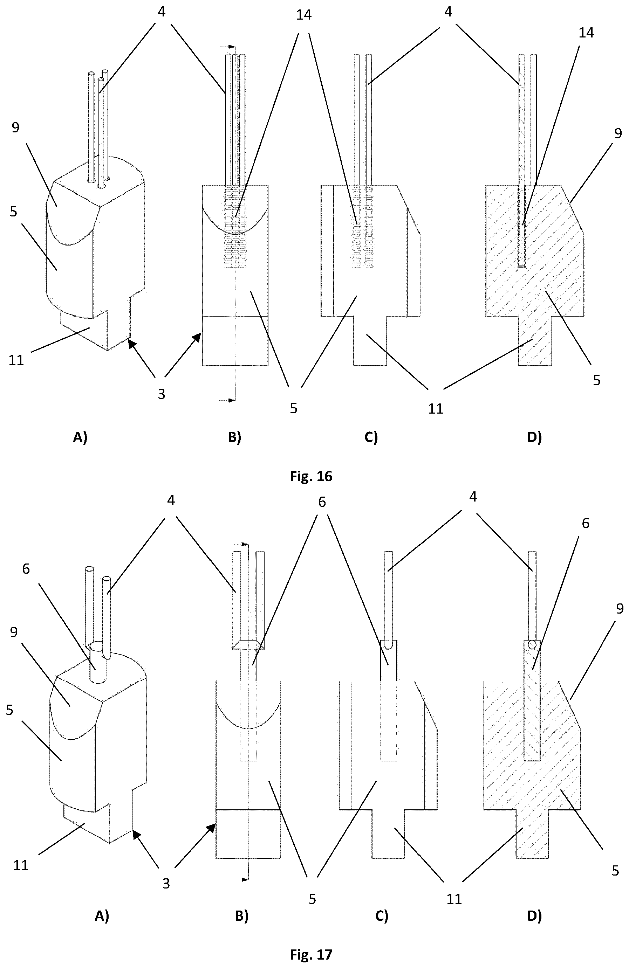

Another non-limiting example of the measurement insert 3 constituting a component of the system for tooth root shape modeling according to the present invention is shown in Figs. 16A-D. The structure of the measurement insert 3 shown in Figs. 16A-D is substantially similar to the structure of the measurement insert 3 shown in Figs. 15A-D, with the difference that the canal part 4 comprises three plastically deformable wires extending from the base part 5 and releasably connected thereto by means of three coupling systems 14, respectively. The plastically deformable wires of the canal part 4 are arranged next to each other at a small distance (forming a triangular arrangement in the top view) and are intended for insertion into three separate tooth root canals.

Another non-limiting example of the measurement insert 3 constituting a component of the system for tooth root shape modeling according to the present invention is shown in Figs. 17A-D. The structure of the measurement insert 3 shown in Figs. 17A-D is substantially similar to the structure of the measurement insert 3 shown in Figs. 11A-D with the difference that the canal part 4 comprises two plastically deformable wires which are attached to the base part 5 via a single intermediate part 6. Similarly, the intermediate part 6 in the present example is a cylinder made of a rigid material, the lower segment of which extends into the base part 5 and is permanently attached thereto. A second segment of the intermediate part 6 extends from the upper surface of the base part 5, and two plastically deformable wires are permanently attached to the protruding segment of the intermediate part 6 which extend parallel to the axis of the intermediate part 6.

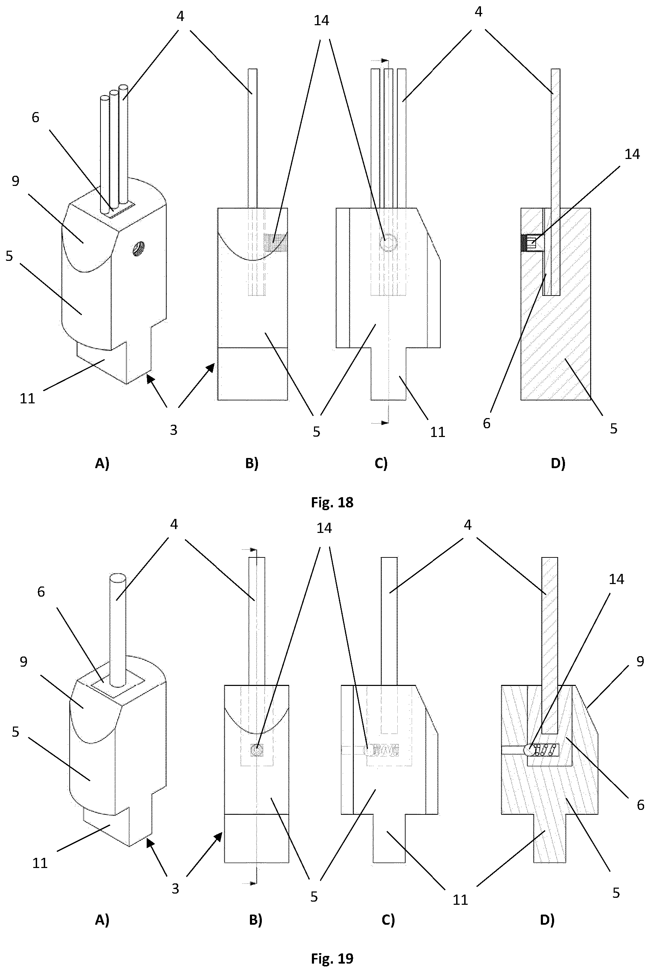

Another non-limiting example of the measurement insert 3 constituting a component of the system for tooth root shape modeling according to the present invention is shown in Figs. 18A-D. The structure of the measurement insert 3 shown in Figs. 18A-D is substantially similar to the structure of the measurement insert 3 shown in Figs. 13A-D with the difference that the canal part 4 in the form of three plastically deformable wires is permanently connected to an intermediate part 6 which is inserted into a corresponding socket formed in the upper surface of the base part 5 and locked by means of a coupling system 14. The canal part 4 shown in the present embodiment comprises three plastically deformable wires arranged in a row and running substantially parallel to each other, while the intermediate part 6 is formed of a cuboid block having longitudinal grooves for receiving said three plastically deformable wires. The canal part 4 together with the intermediate part 6 after being inserted into an appropriately formed socket in the base part 5 is locked by means of a coupling system 14 in the form of a locking screw screwed into a threaded hole formed on the side wall of the base part 5. After screwing in the locking screw, its face rests against the intermediate part 6 and presses the entire system, preventing it from sliding out of the socket in the base part 5.

Another non-limiting example of the measurement insert 3 constituting a component of the system for tooth root shape modeling according to the present invention is shown in Figs. 19A-D. The structure of the measurement insert 3 shown in Figs. 19A-D is substantially similar to the structure of the measurement insert 3 shown in Figs. 11A-D with the difference that the canal part 4 comprises one plastically deformable wire which is attached to the base part 5 via an intermediate part 6, the intermediate part 6 being releasably connected to the base part 5 via a coupling system 14. The intermediate part 6 is in the present example a cuboid formed of a rigid material which is fully inserted into a complementary socket formed in the upper surface of the base part 5, the canal part 4 being permanently mounted in the intermediate part 6. The detachable connection of the intermediate part 6 to the base part 5 is provided by the coupling system 14, which in the present embodiment takes the form of a lock in the form of a ball, which is pushed out laterally by means of a spring from an opening of a smaller diameter than the diameter of the ball. In the extended position, the ball protrudes from the side wall of the intermediate part 6 by a section of the ball, the diameter of the base being smaller than the diameter of the ball. Due to the spring, the ball is able to move towards the centre of the intermediate part 6 as a result of an applied force of a value greater than the force exerted by the spring. A through hole is formed in the base part 5, on its side wall, which receives the section of the ball after the intermediate part 6 is placed in the connection position, blocking the sliding out of the intermediate part 6 from the base part 5. In order to ensure that the intermediate part 6 can be pushed out of the base part 5, a pin (not shown) is inserted through the through hole, which allows the ball to be moved towards the centre of the intermediate part 6 and the blocking action of the coupling system 14 can be removed.

Another non-limiting example of the measurement insert 3 constituting a component of the system for tooth root shape modeling according to the present invention is shown in Figs. 20A-D. The structure of the measurement insert 3 shown in Figs. 20A-D is substantially similar to the structure of the measurement insert 3 shown in Figs. 19A-D with the difference that the coupling system 14 is realized by means of a resilient tongue, on the side surface of which a locking tooth is formed, which is inserted into a complementary groove formed on the side wall of the socket of the base part 5. Due to the resilient nature of the tongue, when the intermediate part 6 is inserted into the socket, the resilient tongue bends towards the canal part 4 until the intermediate part 6 reaches its final position (fully inserted), in which the locking tooth is inserted into the groove, preventing the intermediate part 6 from freely sliding out of the base part 5. To disconnect the intermediate part 6 from the base part 5, the tongue is again bent towards the canal part 4, which causes the locking tooth to disengage from the groove and thus removes the blockage preventing the intermediate part 6 from sliding out.

### List of reference numerals:

- **1** -: body
- **2** -: reference element
- **3** -: measurement insert
- **4 -**: canal part of the measurement insert
- **5** -: base part of the measurement insert
- **6** -: intermediate part of the measurement insert
- **7** -: first reference area
- **8** -: second reference area
- **9** -: bevel
- **10** -: impression
- **11 -**: post
- **12** -: socket
- **13** -: filling
- **14** -: coupling system

## Claims

1. A measurement insert (3) for a system for tooth root canal shape modeling comprising an imaging device and a calibration stand, wherein the measurement insert (3) comprising a canal part (4) configured to be inserted into a tooth root canal being modeled and a base part (5) configured to be connected to the calibration stand, wherein the canal part (4) extending from the base part (5), **characterized in that** the canal part (4) comprises at least one plastically deformable wire.

2. The measurement insert (3) according to claim 1, **characterized in that** the canal part (4) is connected to the base part (5) via an intermediate part (6).

3. The measurement insert (3) according to claim 2, **characterized in that** the canal part (4) is releasably connected to the intermediate part (6) via a coupling system (14).

4. The measurement insert (3) according to claim 2 or 3, **characterized in that** the intermediate part (6) is releasably connected to the base part (5) via the coupling system (14).

5. The measurement insert (3) according to claim 1, **characterized in that** the canal part (4) is releasably connected to the base part (5) via a coupling system (14).

6. The measurement insert (3) according to any of claims 3 - 5, **characterized in that** the coupling system (14) is formed by a threaded connection, a locking screw with a complementary threaded hole, a locking system with a ball tensioned by a spring or a locking system with a resilient tongue.

7. The measurement insert (3) according to any of claims 1 - 6, **characterized in that** a post (11) or a socket (12) configured to form a form-fit connection with a corresponding socket or plug arranged on the calibration stand is formed on the lower surface of the base part (5).

8. The measurement insert (3) according to any of claims 1 - 7, **characterized in that** the canal part (4) of the measurement insert (3) extends along an axis laterally shifted from the axis of the base part (5).

9. The measurement insert (3) according to any of claims 1 - 8, **characterized in that** the canal part (4) of the measurement insert (3) has a structured surface.

10. The measurement insert (3) according to any of claims 1 - 9, **characterized in that** the base part (5) of the measurement insert (3) has a bevel (9) in the region adjacent to the canal part (4) and/or in the region adjacent to the opposite end.

11. The measurement insert (3) according to any of claims 1 - 10, **characterized in that** the at least one plastically deformable wire is made of a material selected from the group comprising stainless steel, chromium-nickel steel, chromium-cobalt alloy, titanium, titanium alloy, precious metal, including gold.

12. A system for tooth root canal shape modeling comprising an imaging device and a calibration stand, wherein the calibration stand comprises a body (1) comprising two reference areas (7, 8), with at least one reference element (2) being arranged on the upper surface of the body (1), and a measurement insert (3) comprising a canal part (4) and a base (5) part, wherein the body (1) is detachably connected with the base part (5) so that the canal part (4) extends perpendicular to the upper surface of the body (1) and substantially parallel to the reference element (2), **characterized in that** the measurement insert is the measurement insert (3) as defined in any of claims 1 to 11.

13. The system according to claim 12, **characterized in that** the reference element (2) is a solid having a symmetry axis extending perpendicular to the upper surface of the body (1) and substantially parallel to the canal part (4) of the measurement insert (3).

14. The system according to claim 13, **characterized in that** the reference element (2) is selected from a group comprising: a cone or a truncated cone, a cylinder, a prism with a polygonal base, a pyramid with a polygonal base and their combinations.

15. A method for tooth root canal shape modeling comprising the following steps:
**a)** impression compound is introduced into the tooth canal, and subsequently a measurement insert is introduced thereto,
**b)** after the impression compound has set, the measurement insert is removed,
**c)** the measurement insert with the set impression compound is scanned with the imaging device,
**characterized in that** the measurement insert is the measurement insert (3) as defined in any of claims 1 to 11 and/or in step c) the measurement insert is scanned by means of the system for tooth root canal shape modeling as defined in any of claims 12 - 14.
